# EUROPEAN PATENT APPLICATION

(11) **EP 2 862 434 A1**
(43) Date of publication of application: **22.04.2015**
(21) Application number: 14187842.1
(22) Date of filing: 06.10.2014
(51) Int. Cl.: A01D 46/26

(54) **Portable beating device for picking fruit off trees, in particular for picking olives**

(30) Priority: 16.10.2013 IT MI20131723
(71) Applicant: DAVIDE E LUIGI VOLPI S.p.A., 46040 Casalromano (IT)
(72) Inventor: Caporali, Gabriele, 46040 Casalromano (IT); Tracconaglia, Giordano, 25025 Manerbio (IT); Vergine, Enrico, 25020 Cigole (IT)
(74) Representative: Cernuzzi, Daniele

(57) **Abstract**

A portable beating device (1) for picking fruit off trees, in particular for picking olives, and which has: a supporting body (11); a slide (12) slidable along a translation axis (S) with respect to the supporting body (11); a transmission system (13) for translating the slide (12) back and forth along the translation axis (S); and two beating members (3); each beating member having an arm (30), which extends along a longitudinal axis (B) from the supporting body (11) and is hinged to the slide (12) by a hinge pin (23), and a plurality of side by side prongs (31), which project from the arm (30); and the arms (30) being connected to the supporting body (11) by respective joints (37), which allow the arms (30) to slide along their respective longitudinal axes (B), inside the respective joints (37), as the arms (30) rotate about the hinge pins (23).

## Description

The present invention relates to a portable beating device for picking fruit off trees, in particular for picking olives.

A wide range of portable fruit-picking beating devices, particularly for olives, are known, and which substantially comprise rotary or vibratory beating members fitted to a hand-held supporting structure and powered by an electric motor to shake the branches of the tree and so shake off the fruit (olives).

More specifically, devices are known comprising two oscillating arms, which are hinged at respective ends, are moved back and forth by a transmission system connected to an electric motor, and rotate back and forth about respective hinge pins.

Known devices of this sort, however, leave room for improvement, especially in terms of easy, low-cost manufacture and operation, effectiveness, versatility, and easy use.

It is therefore an object of the present invention to provide a portable beating device, for picking fruit of trees, which is not only cheap and easy to produce and operate, but also highly effective, practical, and versatile.

According to the present invention, there is provided a portable beating device for picking fruit off trees, in particular for picking olives, comprising: a supporting body; a slide slidable along a translation axis with respect to the supporting body; a transmission system for translating the slide back and forth along the translation axis; and two beating members; each beating member comprising an arm, which extends along a longitudinal axis from the supporting body and is hinged to the slide by a hinge pin, and a plurality of side by side prongs, which project from the arm; the arms being connected to the supporting body by respective joints, which allow the arms to slide along their respective longitudinal axes, inside the respective joints, as the arms rotate about the hinge pins.

More specifically, the joints, which are advantageously spherical joints, have respective slide seats housing respective end portions of the arms; the end portions of the arms are slidable, inside the respective slide seats, along the respective longitudinal axes of the arms.

The device according to the invention is extremely cheap and easy to produce and use, and is compact, sturdy and reliable.

In addition to rotating back and forth, the arms of the device also have a translational movement along their respective longitudinal axes, which greatly improves the performance of the device and allows more effective and reliable operations.

A non-limiting embodiment of the present invention will be described by way of example with reference to the attached drawings, in which :
Figure 1 is a perspective view of a portable beating device for picking fruit of trees, in particular for picking olives, in accordance with the invention;
Figure 2 is an exploded perspective view, with parts removed for clarity, of the Figure 1 device;

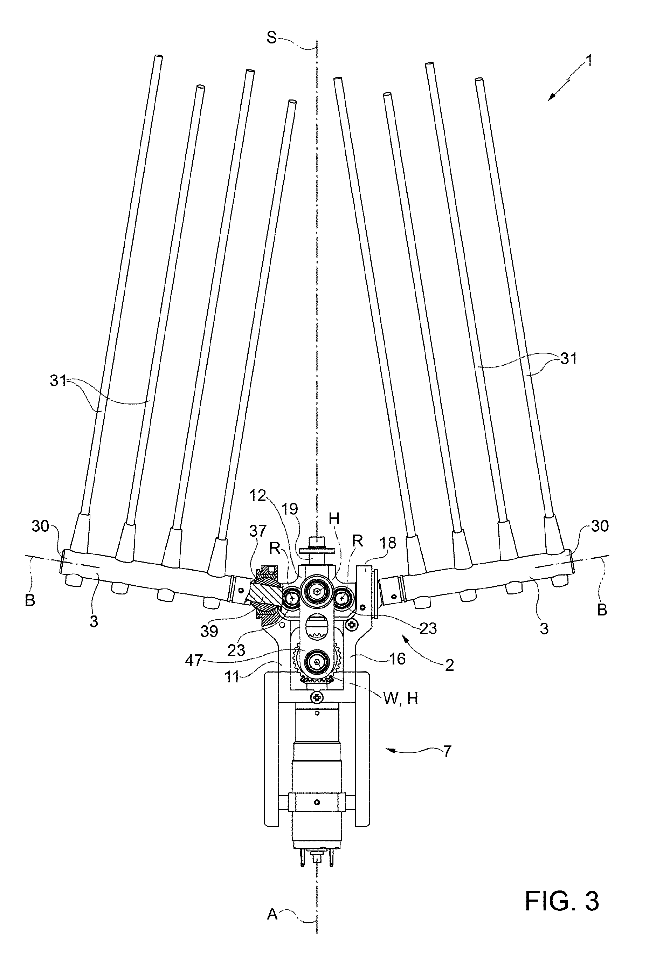

Figure 3 is a partly sectioned front elevation view of the Figure 1 device;
Figures 4-6 are respective partly sectioned front views of the Figure 1 device in different operating positions.

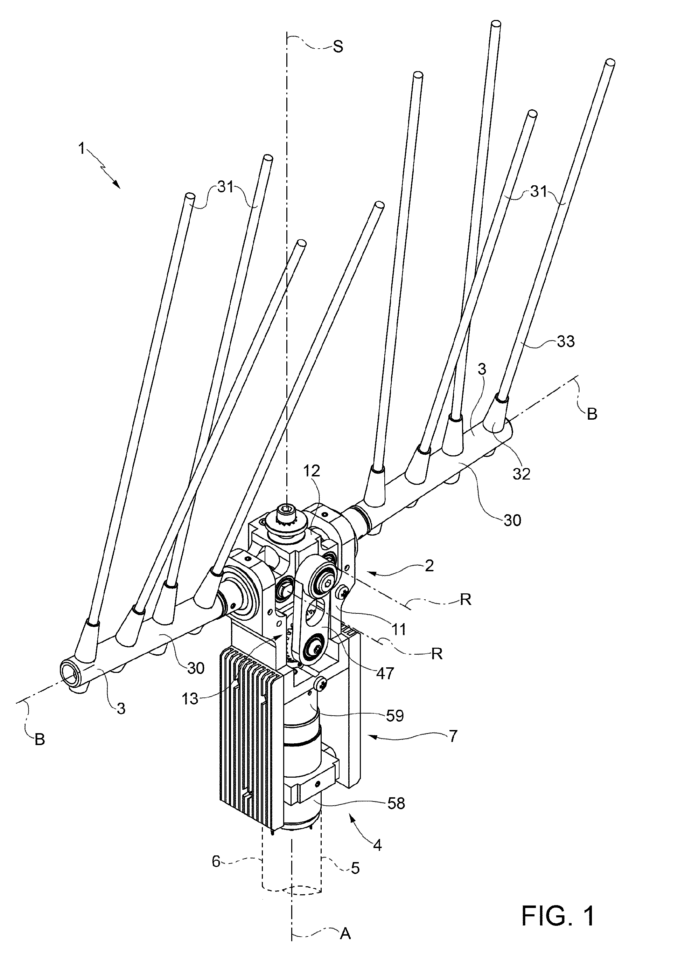

Number 1 in the attached drawings indicates as a whole a portable beating device for picking fruit off trees, in particular for picking olives. Device 1 comprises : a beater assembly 2 with beating members 3; a drive 4 for powering beater assembly 2; and an elongated grip rod 5 (only shown schematically in Figure 1).

Beater assembly 2 is fitted to a longitudinal end 6 of rod 5. In the non-limiting example shown, though not necessarily, drive 4 is also fitted to end 6 of rod 5 to form, together with beater assembly 2, an operating head 7 of device 1.

Device 1, and more specifically head 7 and therefore beater assembly 2, extend along an axis A substantially aligned with or parallel to rod 5.

Beater assembly 2 comprises : a supporting body 11; a slide 12 slidable with respect to supporting body 11 along a translation axis S aligned with or parallel to axis A; a transmission system 13 connected to drive 4 to translate slide 12 back and forth along translation axis S; and two beating members 3 hinged to slide 12.

Supporting body 11 has a guide 15 located along translation axis S (and along or parallel to axis A).

More specifically, supporting body 11 has a fork portion 16 having a base crosspiece 17, from which project two lateral arms 18 enclosing slide 12.

Guide 15 comprises a rod 19, which projects from supporting body 11, and more specifically from crosspiece 17, along translation axis S (and therefore along or parallel to axis A). Rod 19 is inserted inside a seat 20 in slide 12, and is fixed axially integral with supporting body 11, and more specifically to crosspiece 17.

Slide 12 is located between lateral arms 18 of supporting body 11, and is fitted around, so as to slide along, rod 19.

More specifically, slide 12 comprises a central portion 21 with seat 20; and lateral wings 22, which project from opposite sides of central portion 21 and translation axis S, and support respective hinge pins 23 connecting beating members 3 in rotary manner to slide 12.

Seat 20 is formed through central portion 21, along translation axis S, and houses rod 19, which is slidable axially inside seat 20.

In the example shown, slide 12 comprises a pair of wings 22 on each side of central portion 21; the wings 22 in each pair are positioned facing and spaced apart, and have respective holes 24 aligned along respective axes of rotation R; and the wings 22 in each pair are separated by a cavity 25.

Beating members 3 are located on opposite sides of, and project laterally from, supporting body 11.

Each beating member 3 comprises an arm 30 hinged to slide 12 and supported by supporting body 11; and a plurality of prongs 31 projecting from, and arranged side by side along, arm 30. Prongs 31 are spaced longitudinally along arm 30, are substantially perpendicular to arm 30, and are preferably inclined at different angles.

Each prong 31 comprises, for example, a root portion 32 fixed to an arm 30; and a straight stick 33 projecting from root portion 32.

Arms 30 extend along respective longitudinal axes B, and are hinged to slide 12 by respective hinge pins 23 extending along respective axes of rotation R perpendicular to translation axis S of slide 12.

More specifically, arms 30 have respective longitudinal ends 35 inserted inside respective cavities 25 in slide 12 and engaged by respective hinge pins 23; and each end 35 has a through hole 36 aligned with holes 24 and engaged by a hinge pin 23.

Beating members 3, more specifically respective arms 30, are connected to supporting body 11, more specifically to respective lateral arms 18 of supporting body 11, by respective joints 37, which allow arms 30 to slide along respective longitudinal axes B, inside respective joints 37, as the arms rotate about hinge pins 23.

More specifically, each arm 30 is connected to supporting body 11 by a joint 37 located on a lateral arm 18 of supporting body 11.

Each joint 37 comprises a slide seat 38 which houses an end portion 39 of arm 30, located at end 35 of arm 30 and which is inserted slidably inside slide seat 38 along longitudinal axis B of arm 30.

More specifically, joints 37 are spherical joints.

Each joint 37 comprises an outer member 41 and an inner member 42 joined along respective sphere-portion-shaped surfaces 43; outer member 41 is fixed to supporting body 11, e.g. is housed inside a seat 44 formed in a lateral arm 18; and slide seat 38 is formed through inner member 42.

Transmission system 13 is connected to drive 4 to translate slide 12 back and forth along translation axis S.

More specifically, transmission system 13 comprises a connecting rod 47 hinged at opposite longitudinal ends 48, 49 to a crank member 50 and to slide 12 respectively.

Longitudinal ends 48, 49 of connecting rod 47 are hinged about respective hinge axes H, perpendicular to translation axis S and axis A, by respective hinge pins 51 perpendicular to translation axis S and axis A.

Crank member 50 comprises a wheel 52 which rotates about a transverse rotation axis W perpendicular to translation axis S and axis A; and an eccentric pin 53 fixed integrally to wheel 52, eccentrically with respect to transverse rotation axis W of wheel 52, and hinged to a first end 48 of connecting rod 47 (by a hinge pin 51).

Wheel 52 is fixed integrally to a ring gear 54 which meshes with a pinion 55 connected to a drive shaft 56 extending from drive 4, e.g. along axis A.

Advantageously, pinion 55 and ring gear 54 are bevel gears; pinion 55 is fitted to drive shaft 56 (or to an extension of it) and rotates about axis A; ring gear 54 is fitted integrally to, e.g. around, wheel 52, and is supported by supporting body 11, together with wheel 52, by means of a pin 57; and ring gear 54 and wheel 52 rotate together about transverse rotation axis W.

Drive 4 comprises a motor 58, more specifically an electric motor, and a reducer 59, both aligned, for example, along axis A.

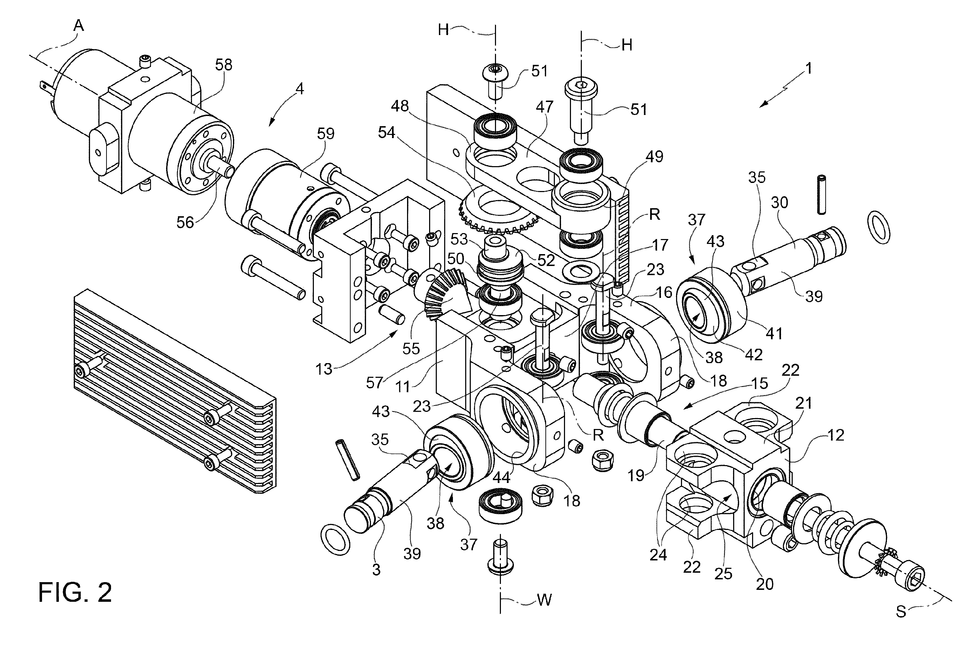

For the sake of simplicity, the fastening members, shown in particular in Figure 2, for assembling the component parts of device 1 are not described in detail.

Again for the sake of simplicity, the devices for powering and controlling device 1 are not shown either.

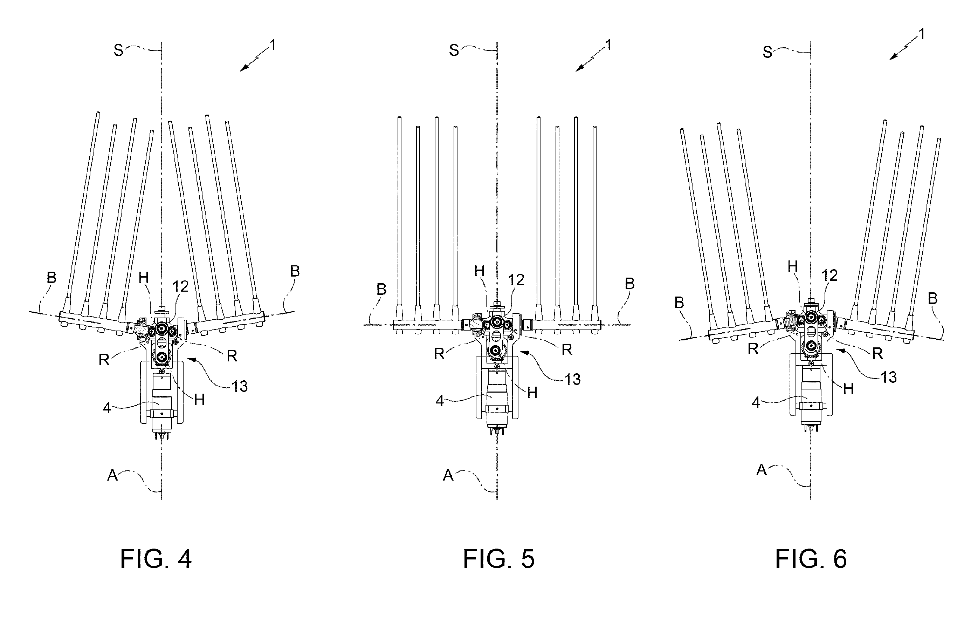

With reference also to Figures 4-6, in actual use, drive 4 powers transmission system 13 via drive shaft 56.

Rotation of drive shaft 56 is converted to back and forth translatory movement by transmission system 13 acting on slide 12.

More specifically, drive shaft 56 rotates pinion 55, which rotates ring gear 54 and therefore wheel 52 with eccentric pin 53.

Ring gear 54 and wheel 52 rotate about transverse rotation axis W, and eccentric pin 53 in turn rotates to push connecting rod 47, which moves slide 12 along translation axis S and guide 15.

Slide 12 is translated back and forth along translation axis S and guide 15.

Slide 12 takes with it arms 30, and more specifically ends 35 of arms 30, of beating members 3; and ends 35 of arms 30 and hinge pins 23 connecting ends 35 to slide 12 also translate in a direction parallel to translation axis S.

Arms 30, being also connected to supporting body 11 by joints 37, more specifically by respective end portions 39 housed inside slide seats 38, rotate about hinge pins 23, and therefore about respective axes of rotation R, and at the same time slide inside respective slide seats 38.

In addition to oscillating about respective rotation axes R, beating members 3 therefore also slide along respective longitudinal axes B with respect to supporting body 11.

Clearly, changes may be made to the device as described and illustrated herein without, however, departing from the scope of the accompanying Claims.

## Claims

1. A portable beating device (1) for picking fruit off trees, in particular for picking olives, comprising: a supporting body (11); a slide (12) slidable along a translation axis (S) with respect to the supporting body (11); a transmission system (13) for translating the slide (12) back and forth along the translation axis (S); and two beating members (3); each beating member comprising an arm (30), which extends along a longitudinal axis (B) from the supporting body (11) and is hinged to the slide (12) by a hinge pin (23), and a plurality of side by side prongs (31), which project from the arm (30); the arms (30) being connected to the supporting body (11) by respective joints (37), which allow the arms (30) to slide along their respective longitudinal axes (B), inside the respective joints (37), as the arms (30) rotate about the hinge pins (23).

2. A device as claimed in Claim 1, wherein the joints (37) are provided with respective slide seats (38) housing respective end portions (39) of the arms (30); the end portions (39) of the arms (30) being slidable, inside the respective slide seats (38), along the respective longitudinal axes (B) of the arms (30).

3. A device as claimed in Claim 1 or 2, wherein the joints (37) are spherical joints.

4. A device as claimed in Claim 3, wherein each joint (37) comprises an outer member (41) and an inner member (42), coupled along respective sphere-portion-shaped surfaces; the outer member (41) being fixed to the supporting body (11), and the inner member (42) having a slide seat (38) housing an end portion (39) of an arm (30).

5. A device as claimed in one of the foregoing Claims, wherein the slide (12) is slidable in a guide (15) formed on the supporting body (11) along the translation axis (S).

6. A device as claimed in one of the foregoing Claims, wherein the arms (30) are hinged to respective lateral wings (22) of the slide (12), on opposite sides of the translation axis (S).

7. A device as claimed in one of the foregoing Claims, wherein the transmission system (13) comprises a connecting rod (47) hinged at opposite longitudinal ends (48, 49) to a crank member (50) and the slide (12) respectively.

8. A device as claimed in Claim 7, wherein the longitudinal ends (48, 49) of the connecting rod (47) are hinged about respective hinge axes (H), perpendicular to the translation axis (S), by respective hinge pins (51) perpendicular to the translation axis (S).

9. A device as claimed in Claim 7 or 8, wherein the crank member (50) comprises a wheel (52) which rotates about a transverse rotation axis (W) perpendicular to the translation axis (S); and an eccentric pin (53) fixed integrally to the wheel (51), eccentrically with respect to the transverse rotation axis (W), and hinged to a first end (48) of the connecting rod (47).

10. A device as claimed in Claim 9, wherein the wheel (52) is fixed integrally to a ring gear (54), which meshes with a pinion (55) connected to a drive shaft (56).
